# FASCICULE DE BREVET EUROPEEN

(11) **EP 4 183 993 B1**
(45) Date de publication et mention de la délivrance du brevet: **03.01.2024**
(21) Numéro de dépôt: 22197929.7
(22) Date de dépôt: 27.09.2022
(51) Int. Cl.: F02C 6/04, F01D 15/10, B64D 31/06, F02C 7/32, F02C 9/18, B64D 13/06, B64D 27/02, F02C 9/00, F02C 9/42

(54) **PROCÉDÉ DE GESTION DES QUANTITÉS DE PUISSANCE PRÉLEVÉES SUR DES UNITÉS DE PUISSANCE DES ENSEMBLES DE PROPULSION D'UN AÉRONEF**
VERFAHREN ZUR VERWALTUNG VON LEISTUNGSMENGEN, DIE AUF LEISTUNGSEINHEITEN DER ANTRIEBSANORDNUNGEN EINES FLUGZEUGS ENTNOMMEN WURDEN
METHOD FOR MANAGING POWER QUANTITIES TAKEN FROM POWER UNITS OF THE PROPULSION ASSEMBLIES OF AN AIRCRAFT

(30) Priorité: 22.11.2021 FR 2112353
(43) Date de publication de la demande: 24.05.2023
(73) Titulaire: AIRBUS OPERATIONS (S.A.S.), 31060 Toulouse (FR); Airbus (S.A.S.), 31700 Blagnac (FR)
(72) Inventeur: BOUKAYOUA, Souhaib, 31060 Toulouse (FR); ZACCARIA, Patrick, 31700 Blagnac (FR); BOYER, David, 31060 Toulouse (FR); POIRIER, Didier, 31700 Blagnac (FR); ROUX, Paul-Emile, 31060 Toulouse (FR); ALIX, Guillaume, 31060 Toulouse (FR); DASTE, Pierre, 31060 Toulouse (FR); COUE, Lucie, 31060 Toulouse (FR)
(74) Mandataire: Sarraméa, Claude

(56) Documents cités:
- EP-A1- 2 955 334
- FR-A1- 3 059 734
- FR-A1- 3 099 526

## Description

La présente demande se rapporte à un procédé de gestion des quantités de puissances prélevées sur des unités de puissance des ensembles de propulsion d'un aéronef.

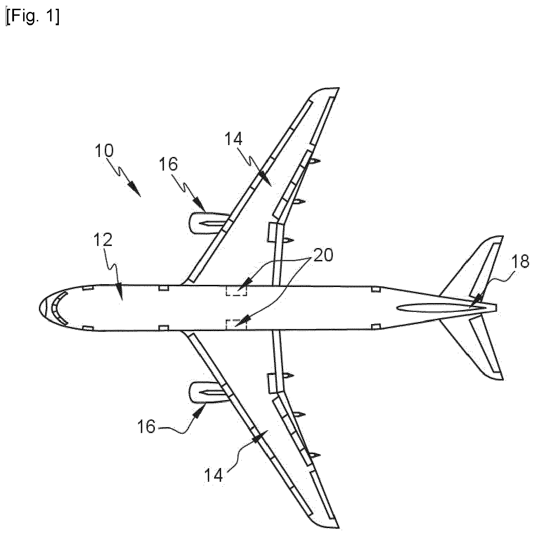

Selon un mode de réalisation illustré sur la figure 1, un aéronef 10 comprend un fuselage 12, des ailes 14 disposées de part et d'autre du fuselage 12 ainsi que des ensembles de propulsion 16 reliés aux ailes 14 et positionnés de part et d'autre du fuselage 12. Chaque ensemble de propulsion 16 comprend une unité de puissance comme un turboréacteur par exemple, un système de prélèvement de puissance pneumatique comme un compresseur par exemple, au moins un système de prélèvement mécanique comme un alternateur par exemple ainsi que différents équipements complémentaires, comme des pompes hydrauliques ou un système de refroidissement par exemple, destinés au bon fonctionnement de l'ensemble de propulsion 16. L'aéronef 10 comprend généralement d'autres sources de puissance comme un groupe auxiliaire de puissance 18, des batteries 20 ou autres.

L'aéronef 10 comprend également plusieurs charges électriques, comme les systèmes avioniques de l'aéronef ou les commandes de vol de l'aéronef par exemple, utilisant de l'énergie électrique ainsi que plusieurs charges pneumatiques, comme le système de gestion de l'air conditionné par exemple, utilisant de l'énergie pneumatique.

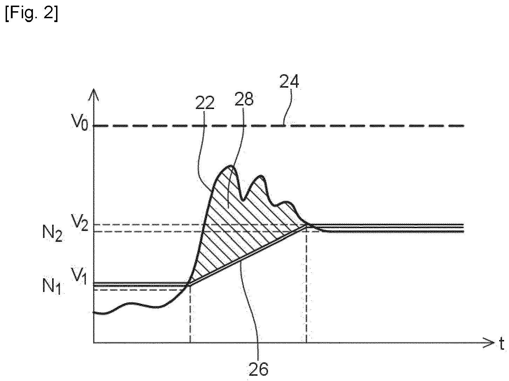

Comme illustré sur la figure 2, les besoins réels en énergie 22 des charges électriques et pneumatiques varient en fonction du temps.

Les charges électriques ou pneumatiques de l'aéronef n'étant pas rattachées aux mêmes unités de puissance, les quantités de puissance prélevées ainsi que les variations des quantités de puissance prélevées peuvent être différentes d'une unité de puissance à l'autre en fonction des charges électriques ou pneumatiques conduisant à une augmentation des besoins en énergie.

Chaque ensemble de propulsion 16 comprend une unité de contrôle qui lui est propre, configurée pour gérer le régime moteur de son unité de puissance ainsi que la puissance générée par cette dernière et l'orienter en fonction des besoins en énergie.

Selon une logique de fonctionnement, chaque unité de puissance fonctionne à un régime moteur 24 ajusté à une valeur V0 constante lui permettant de fournir l'énergie nécessaire pour alimenter toutes les charges électriques et pneumatiques de l'aéronef quels que soient leurs besoins réels en énergie. Selon cette logique de fonctionnement, la valeur V0 est élevée, ce qui se traduit par une consommation énergétique élevée pour l'aéronef.

Le document FR3099526 propose un procédé de contrôle des régimes moteurs des unités de puissance des différents ensembles de propulsion de l'aéronef ainsi que des prélèvements de puissance sur lesdites unités de puissance. Ce procédé comprend une étape de détermination en temps réel des besoins réels en énergie de l'aéronef ainsi qu'une étape d'adaptation, si nécessaire, du régime moteur d'au moins une unité de puissance en fonction de la variation des besoins réels en énergie. Pour au moins une unité de puissance, son régime moteur 26 est initialement ajusté à une valeur V1, correspondant à une première capacité de prélèvement de puissance, lui permettant de répondre aux besoins réels en énergie lorsque ces derniers sont sensiblement à un premier niveau moyen N1. Lorsque les besoins réels en énergie augmentent à un deuxième niveau moyen N2, le procédé comprend une étape d'augmentation du régime moteur 26 à une deuxième valeur V2 déterminée de manière à ce que la capacité de prélèvement de puissance de l'unité de puissance soit suffisante pour couvrir les besoins réels en énergie correspondant au deuxième niveau moyen N2.

Le changement du régime moteur n'étant pas instantané, un prélèvement de puissance 28 sur une autre source de puissance, comme les batteries 20 par exemple, peut être réalisé.

Le procédé décrit dans le document FR3099526 permet de réduire sensiblement la consommation énergétique de l'aéronef en ajustant au plus juste le régime moteur des unités de puissance des ensembles de propulsion de l'aéronef de manière à ce que la capacité totale de prélèvement de puissance sur les unités de puissance soit adaptée aux besoins réels en énergie et ne soit pas, la majorité du temps, largement excessive à ces besoins. L'augmentation des besoins réels en énergie peut nécessiter une adaptation de la quantité de puissance prélevée sur une ou plusieurs unités de puissance.

Il est impératif que ces changements de quantités de puissance prélevées sur une ou plusieurs unités de puissance soient sécurisés afin qu'ils n'engendrent pas de dysfonctionnement simultané de plusieurs unités de puissance.

La présente invention vise à proposer une solution pour sécuriser l'adaptation du régime moteur des unités de puissance afin de répondre aux besoins réels en énergie.

A cet effet, l'invention a pour objet un procédé de gestion des quantités de puissance prélevées sur des unités de puissance des ensembles de propulsion d'un aéronef,
- chaque unité de puissance étant configurée pour occuper un état opérationnel ou un état non opérationnel et présentant une capacité de prélèvement de puissance,
- l'aéronef comprenant au moins des première et deuxième unités de puissance, requérant pour un vol un nombre minimal d'unités de puissance à l'état opérationnel et présentant des besoins réels en énergie,
- le procédé comprenant une étape d'augmentation des quantités de puissance prélevées sur au moins les première et deuxième unités de puissance en raison d'une augmentation des besoins réels en énergie de l'aéronef.

Selon l'invention, le procédé comprend une étape d'augmentation de la quantité de puissance prélevée sur ladite deuxième unité de puissance, décalée dans le temps par rapport à une étape d'augmentation de la quantité de puissance prélevée sur ladite première unité de puissance d'une durée permettant au moins de déterminer l'état opérationnel ou non de la première unité de puissance.

Le fait de décaler dans le temps l'augmentation de la quantité de puissance prélevée sur les deux unités de puissance permet d'éviter que les deux unités de puissance ne basculent simultanément à l'état non opérationnel ce qui pourrait avoir pour conséquence d'affecter la sécurité du vol.

Selon une autre caractéristique, l'état de la première unité de puissance est vérifié à l'issue d'un délai déterminé, de l'ordre de quelques secondes, après l'augmentation de la quantité de puissance prélevée sur la première unité de puissance.

Selon une autre caractéristique, l'étape d'augmentation de la quantité de puissance prélevée sur la deuxième unité de puissance n'est réalisée que :
- si la première unité de puissance est à l'état opérationnel à l'issue de l'augmentation de la puissance prélevée sur cette première unité de puissance,
- ou dans le cas contraire, si le nombre déterminé d'unités de puissance à l'état opérationnel, sans prendre en compte l'état de la deuxième unité de puissance, est supérieur ou égal au nombre minimal d'unités de puissance à l'état opérationnel requis pour un vol.

Selon une autre caractéristique, l'unité de puissance parmi les unités de puissance de l'aéronef qui reçoit en premier une demande d'augmentation de la quantité de puissance prélevée reste prioritaire pendant tout le procédé, l'augmentation de la quantité de puissance prélevée sur l'unité de puissance ayant reçu en premier ladite demande d'augmentation étant déclenchée en premier.

Selon une autre caractéristique, l'unité de puissance parmi les unités de puissance de l'aéronef ayant atteint en premier la capacité de prélèvement de puissance adaptée à une demande d'augmentation de la quantité de puissance reste prioritaire pendant tout le procédé, l'augmentation de la quantité de puissance prélevée sur ladite unité de puissance prioritaire étant déclenchée en premier.

D'autres caractéristiques et avantages ressortiront de la description de l'invention qui va suivre, description donnée à titre d'exemple uniquement, en regard des dessins annexés parmi lesquels :
- La figure 1 est une vue de dessus d'un aéronef,
- La figure 2 est une représentation du régime moteur d'une unité de puissance et des besoins réels en énergie d'un aéronef illustrant un mode de réalisation de l'art antérieur,
- La figure 3 est une représentation schématique d'un dispositif de gestion des quantités de puissance prélevées sur des unités de puissance des ensembles de propulsion d'un aéronef illustrant un mode de réalisation de l'invention,
- La figure 4 est une représentation schématique des prélèvements de puissance sur des unités de puissances des ensembles de propulsion d'un aéronef illustrant un premier mode opératoire,
- La figure 5 est une représentation schématique des prélèvements de puissance sur des unités de puissances des ensembles de propulsion d'un aéronef illustrant un premier exemple d'un deuxième mode opératoire,
- La figure 6 est une représentation schématique des prélèvements de puissance sur des unités de puissances des ensembles de propulsion d'un aéronef illustrant un deuxième exemple du deuxième mode opératoire.

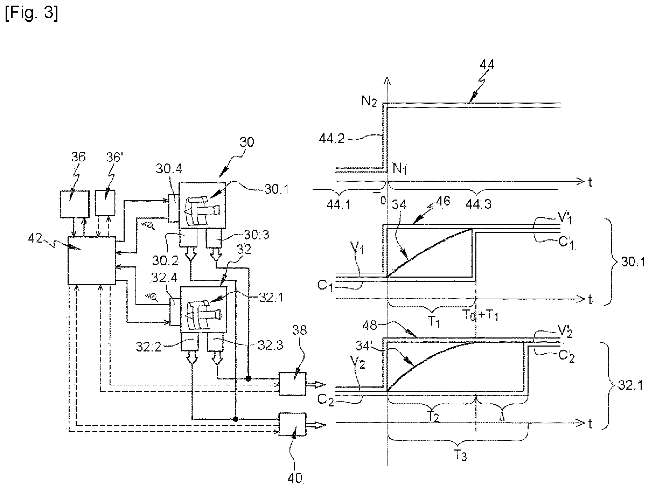

Comme illustré sur la figure 3, un aéronef comprend au moins deux ensembles de propulsion 30, 32 comportant chacun une unité de puissance 30.1, 32.1 comme un turbomoteur ou un turboréacteur par exemple, au moins un système de prélèvement de puissance pneumatique 30.2, 32.2 comme un compresseur par exemple, au moins un système de prélèvement de puissance mécanique 30.3, 32.3 comme un alternateur par exemple, ainsi que différents équipements complémentaires, comme des pompes hydrauliques ou un système de refroidissement par exemple, destinés au bon fonctionnement de l'ensemble de propulsion 30, 32.

Selon une conception, chaque ensemble de propulsion 30, 32 comprend au moins un premier système de prélèvement de puissance mécanique 30.3, 30.3 destiné à l'aéronef, convertissant l'énergie mécanique en énergie électrique et assurant la fonction de source de puissance de type électrique pour l'aéronef, ainsi qu'au moins un deuxième système de prélèvement de puissance mécanique (non représenté) destiné à l'ensemble de propulsion 30, 32 etnotamment à ses équipements complémentaires.

Chaque ensemble de propulsion 30, 32 comprend une unité de contrôle 30.4, 32.4 pour gérer le fonctionnement de l'unité de puissance 30.1, 32.1 ainsi que des systèmes de prélèvement de puissance pneumatique, électrique et/ou mécanique. Ainsi, l'unité de contrôle 30.4, 32.4 est configurée pour contrôler le régime moteur de l'unité de puissance 30.1, 32.1. Pour un régime moteur donné, l'unité de puissance 30.1, 32.1 est capable de fournir une capacité de prélèvement de puissance 34, 34' qui correspond à la valeur maximale de la puissance qu'il est possible de prélever sur l'unité de puissance 30.1, 32.1.

Les ensembles de propulsion 30, 32 ne sont pas plus décrits car ils peuvent être identiques à ceux de l'art antérieur.

Chaque aéronef comprend un nombre donné d'ensembles de propulsion. Il est configuré pour pouvoir voler avec un nombre minimal Mmin d'unités de puissance à l'état opérationnel. A titre d'exemple, dans le cas d'un aéronef comprenant deux ensembles de propulsion, le nombre minimal Mmin d'unités de puissance opérationnelles pour assurer sa mission est égal à 1. Pour un aéronef comportant quatre ensembles de propulsion, le nombre minimal Mmin d'unités de puissance opérationnelles pour pouvoir voler pourra, par exemple, être égal à 2 ou 3 en fonction des règlementations en vigueur.

Chaque unité de puissance 30.1, 32.1 est configurée pour occuper un état opérationnel dans lequel elle peut être comptabilisée parmi le nombre minimal Mmin d'unités de puissance à l'état opérationnel requis pour un vol et un état non opérationnel dans lequel elle ne peut pas être comptabilisée parmi le nombre minimal Mmin d'unités de puissance à l'état opérationnel requis pour un vol.

Selon une configuration, pour chaque ensemble de propulsion 30, 32, son unité de contrôle 30.4, 32.4 est configurée pour déterminer ou indiquer l'état opérationnel ou non de l'unité de puissance 30.1, 32.1 associée. A titre d'exemple, lorsque l'unité de puissance est un turboréacteur, ce dernier peut être équipé d'un capteur configuré pour déterminer la vitesse de rotation de son axe de rotation. Si la valeur mesurée par le capteur pour la vitesse de rotation est nulle ou ne correspond pas à celle du régime moteur, alors l'unité de contrôle 30.4, 32.4 peut en déduire que le turboréacteur est à l'état non opérationnel. Bien entendu, l'invention n'est pas limitée à cette mesure ou à ce critère pour déterminer l'état opérationnel ou non d'une unité de puissance 30.1, 32.1.

L'aéronef comprend également :
- au moins un système avionique assurant entre autres le contrôle de certains équipements électriques, hydrauliques et pneumatiques de l'aéronef ;
- au moins un ensemble électrique qui comporte, en plus des premiers systèmes de prélèvement de puissance mécanique 30.3, 32.3 des ensembles de propulsion 30, 32, au moins une source de puissance complémentaire 36, 36' comme un groupe auxiliaire de puissance 36 dit APU (pour Auxiliary Power Unit en anglais) ou des batteries 36' par exemple, au moins une charge de type électrique 38, au moins un réseau électrique reliant chaque charge de type électrique 38 à au moins une des sources de puissance de type électrique 30.3, 32.3, 36, 36' ;
- au moins un ensemble pneumatique qui comporte, en plus du système de prélèvement de puissance pneumatique 30.2, 32.2 de chaque ensemble de propulsion 30, 32, au moins une charge de type pneumatique 40 comme un système de conditionnement d'air en cabine par exemple et au moins un réseau pneumatique reliant chaque charge de type pneumatique 40 à au moins une des sources de puissance de type pneumatique 30.2, 32.2.

Le groupe auxiliaire de puissance 36 peut comprendre un système de prélèvement de puissance pneumatique assurant la fonction de source de puissance de type pneumatique.

A titre d'exemple, l'ensemble électrique peut comprendre plusieurs charges de type électrique 38 comme le système avionique, un moteur de déplacement de l'aéronef au sol, des équipements électriques de la cabine de l'aéronef ou toute autre charge de type électrique.

Selon un mode de réalisation, les batteries 36' sont rechargeables et l'ensemble électrique comprend un système de gestion des batteries configuré pour gérer la charge des batteries 36'.

Tous ces éléments de l'aéronef ne sont pas plus décrits car ils peuvent être identiques à ceux de l'art antérieur.

L'aéronef comprend au moins un système de contrôle centralisé 42 configuré pour gérer plusieurs sources de puissance de type pneumatique, électrique et/ou mécanique 30.2, 30.3, 32.2, 32.3, 36, 36' en fonction des puissances requises, notamment par la poussée de l'aéronef et les charges de type pneumatique et/ou électrique 38, 40. Le système de contrôle centralisé 42 peut être intégré au système avionique de l'aéronef.

En fonctionnement, l'aéronef comprend des besoins réels en énergie 44, correspondant à la somme des énergies consommées par les charges de type pneumatique, électrique et/ou mécanique, qui évoluent en fonction du temps. A titre d'exemple, les besoins réels en énergie 44 peuvent présenter au moins une première phase en plateau 44.1 durant laquelle les besoins réels en énergie 44 restent dans une plage donnée et présentent un premier niveau moyen N1, au moins une variation 44.2 durant laquelle les besoins réels en énergie 44 varient au-delà de la plage donnée, et au moins une deuxième phase en plateau 44.3 durant laquelle les besoins réels en énergie 44 restent dans une plage donnée et présentent un deuxième niveau moyen N2 supérieur au premier niveau moyen N1.

Selon un agencement, les charges de type pneumatique, électrique et/ou mécanique de l'aéronef ne sont pas rattachées aux mêmes unités de puissance. Ainsi, la puissance nécessaire au fonctionnement d'une charge de type pneumatique, électrique et/ou mécanique est prélevée sur au moins une unité de puissance qui peut d'être différente de celle sur laquelle est prélevée la puissance nécessaire à une autre charge. Par conséquent, les quantités de puissance prélevées ainsi que les variations des quantités de puissance prélevées peuvent être différentes d'une unité de puissance à l'autre en fonction des charges de type pneumatique, électrique et/ou mécanique conduisant à l'augmentation des besoins en énergie.

Pendant la première phase en plateau 44.1, les besoins réels en énergie 44 sont prélevés sur une première unité de puissance 30.1 fonctionnant à un premier régime moteur ajusté à une première valeur V1 qui lui permet d'avoir une première capacité de prélèvement de puissance C1 ainsi que sur une deuxième unité de puissance 32.2 fonctionnant à un deuxième régime moteur ajusté à une deuxième valeur V2 qui lui permet d'avoir une deuxième capacité de prélèvement de puissance C2. Les régimes moteurs des différentes unités de puissance 30.1, 32.1 de l'aéronef sont ajustés de manière à ce que la capacité de prélèvement de puissance C1, C2 de chaque unité de puissance 30.1, 32.1 soit supérieure aux besoins réels en énergie 44 des charges de type pneumatique et/ou électrique 38, 40 reliées à ladite unité de puissance.

Pour chaque unité de puissance 30.1, 32.1, sa capacité de prélèvement de puissance est fonction de la valeur de son régime moteur.

Comme décrit dans le document FR3099526, un procédé de gestion des régimes moteurs et des prélèvements de puissance comprend une étape de détermination en temps réel des besoins réels en énergie 44 de l'aéronef, une étape de détermination en temps réel d'une capacité de prélèvement de puissance pour chaque unité de puissance 30.1, 32.1, une étape de comparaison, pour chaque unité de puissance 30.1, 32.1, des besoins réels en énergie 44 des charges rattachées à l'unité de puissance 30.1, 32.1 considérée et de la capacité de prélèvement de puissance de l'unité de puissance 30.1, 32.1 considérée de l'aéronef et, en fonction de cette comparaison, une étape d'ajustement de la capacité de prélèvement de puissance d'au moins deux unités de puissance si, pour chacune de ces deux unités de puissance 30.1, 32.1, les besoins réels en énergie des charges rattachées à l'une ou l'autres de ces deux unités de puissance 30.1, 32.1 sont supérieurs à la capacité de prélèvement de puissance de ladite unité de puissance 30.1, 32.1.

Selon un mode de réalisation, le système de contrôle centralisé 42 connaît en temps réel les consommations d'énergie de toutes les charges de type pneumatique, électrique et/ou mécanique et détermine, en temps réel, les besoins réels en énergie 44 affectés à chaque unité de puissance de l'aéronef ainsi que les capacités de prélèvement de puissance de chaque unité de puissance 30.1, 32.1. Selon une configuration, l'unité de contrôle 30.4, 32.4 de chaque ensemble de propulsion transmet en temps réel, au système de contrôle centralisé 42, la capacité de prélèvement de puissance de l'unité de puissance 30.1, 32.1 de l'ensemble de propulsion 30, 32 considéré.

Quel que soit le mode de réalisation, l'unité de contrôle centralisé 42 est configurée pour déterminer, en temps réel ou de manière anticipée, une variation 44.2 des besoins réels en énergie 44.

Suite à la détection de la variation 44.2 des besoins réels en énergie 44, le système de contrôle centralisé 42 détermine, pour chaque unité de puissance 30.1, 32.2 impactée, une nouvelle capacité de prélèvement de puissance C1', C2' et le nouveau régime moteur V1', V2' associé. Comme illustré sur la figure 3, un des ensembles de propulsion 30, 32 est sollicité en premier pour cette adaptation. Pour la suite de la description, le premier ensemble de propulsion 30 est sollicité en premier. Bien entendu, dans d'autres circonstances, le deuxième ensemble de propulsion 32 pourrait être sollicité en premier.

L'ordre de sollicitation des ensembles de propulsion peut être imposé par le système de contrôle centralisé 42 ou peut varier en fonction des circonstances, par exemple en fonction des réseaux électrique et/ou pneumatique ou des charges de type électrique et/ou pneumatique 38, 40 nouvellement activées ou requérant un surplus d'énergie.

Le système de contrôle centralisé 42 transmet, au premier ensemble de propulsion 30 sollicité, une première commande d'augmentation du régime moteur de son unité de puissance 30.1 pour que le régime moteur atteigne la nouvelle première valeur V1' correspondant à la nouvelle capacité de prélèvement de puissance C1'.

Comme illustré sur la figure 3, le changement de régime moteur est progressif entre la première valeur V1 et la nouvelle première valeur V1' et nécessite une durée T1. Ce changement de régime moteur étant progressif, le système de contrôle centralisé 42 commande un prélèvement de puissance 46 sur au moins une source de puissance complémentaire 36, 36', comme sur les batteries 36' par exemple. Ce prélèvement de puissance 46 est prévu au moins pendant la durée T1 nécessaire à l'unité de puissance 30.1 pour atteindre sa nouvelle capacité de prélèvement de puissance C1'.

Selon une configuration, le système de contrôle centralisé 42 transmet, au premier ensemble de propulsion 30, une commande d'augmentation progressive du prélèvement de puissance sur la première unité de puissance 30.1, ladite augmentation progressive suivant l'augmentation progressive de la capacité de prélèvement de puissance de la première unité de puissance 30.1. Selon cette configuration, la quantité de puissance prélevée sur la première unité de puissance augmente progressivement entre les instants T0 et T0+T1. En parallèle, la quantité de puissance prélevée sur la source de puissance complémentaire 36, 36' diminue progressivement.

Selon une autre configuration, la quantité de puissance prélevée sur la première unité de puissance 30.1 reste constante tant que son régime moteur n'a pas atteint la nouvelle valeur V1' et que sa capacité de prélèvement de puissance n'a pas atteint la nouvelle valeur C1' à l'instant T0+T1. Ainsi, pendant la durée T1, la quantité de puissance prélevée sur la (ou les) source(s) de puissance complémentaire(s) 36, 36' est constante.

Selon cette autre configuration, lorsque la première unité de puissance 30.1 a atteint son nouveau régime moteur V1', le système de contrôle centralisé 42 transmet, au premier ensemble de propulsion 30, une première commande d'augmentation de la quantité de puissance prélevée sur la première unité de puissance 30.1 afin que la quantité de puissance prélevée sur la première unité de puissance 30.1 corresponde aux nouveaux besoins réels en énergie 44.

Selon une caractéristique de l'invention, le système de contrôle centralisé 42 détermine l'état opérationnel ou non de la première unité de puissance 30.1 après le changement de quantité de puissance prélevée sur la première unité de puissance 30.1 correspondant aux nouveaux besoins réels en énergie 44.

Selon une configuration, en plus de connaître l'état opérationnel ou non de la première unité de puissance 30.1, le système de contrôle centralisé 42 détermine le nombre d'unités de puissance à l'état opérationnel.

Selon un mode opératoire visible sur la figure 3, le système de contrôle centralisé 42 transmet, au deuxième ensemble de propulsion 32, une deuxième commande d'augmentation du régime moteur de son unité de puissance 32.1 pour que son régime moteur atteigne la nouvelle deuxième valeur V2' correspondant à la nouvelle capacité de prélèvement de puissance C2' à atteindre pour la deuxième unité de puissance 32.1.

Comme illustré sur la figure 3, le changement de régime moteur est progressif entre la deuxième valeur V2 et la nouvelle deuxième valeur V2' et nécessite une durée T2, éventuellement égale à la durée T1. Ce changement de régime moteur étant progressif, le système de contrôle centralisé 42 commande un prélèvement de puissance 48 sur au moins une source de puissance complémentaire 36, 36' comme sur les batteries 36' par exemple. Ce prélèvement de puissance 48 est prévu pendant une durée T3 supérieure à la durée T2. Lorsque le deuxième ensemble de propulsion 32 a atteint sa nouvelle capacité de prélèvement de puissance C2', le système de contrôle centralisé 42 détermine ou vérifie l'état opérationnel ou non de la première unité de puissance 30.1. Selon un premier mode de réalisation, si la première unité de puissance 30.1 est à l'état non opérationnel alors le système de contrôle centralisé 42 ne transmet pas au deuxième ensemble de propulsion une deuxième commande d'augmentation de la quantité de puissance prélevée sur la deuxième unité de puissance 32.1 même si la capacité de prélèvement de puissance de la deuxième unité de puissance 32.1 le permet. En variante, si la première unité de puissance 30.1 est à l'état non opérationnel, le système de contrôle centralisé 42 ne transmet au deuxième ensemble de propulsion la deuxième commande d'augmentation de la quantité de puissance prélevée sur la deuxième unité de puissance 32.1 que si le nombre d'unités de puissance à l'état opérationnel, sans prendre en compte la deuxième unité de puissance 32.1, est supérieur ou égal au nombre minimal Mmin d'unités de puissance à l'état opérationnel requis pour un vol.

Si la première unité de puissance 30.1 est à l'état opérationnel ou si la première unité de puissance 30.1 est à l'état non opérationnel mais que le nombre d'unités de puissance à l'état opérationnel, sans prendre en compte la deuxième unité de puissance 32.1, est supérieur ou égal au nombre minimal Mmin d'unités de puissance à l'état opérationnel requis pour un vol alors le système de contrôle centralisé 42 transmet, au deuxième ensemble de propulsion 32, une deuxième commande d'augmentation de la quantité de puissance prélevée sur la deuxième unité de puissance 32.1 afin que la quantité de puissance prélevée sur la deuxième unité de puissance 32.1 corresponde aux nouveaux besoins réels en énergie 44. Ainsi, cette deuxième commande d'augmentation de la quantité de puissance prélevée sur la deuxième unité de puissance 32.1 est décalée dans le temps par rapport à la première commande d'augmentation de la quantité de puissance prélevée sur la première unité de puissance 30.1 d'une durée Δ. Dans ce cas, la durée T3 pendant laquelle une quantité de puissance est prélevée sur au moins une source de puissance complémentaire 36, 36' est au moins égale à la durée T1 augmentée de la durée Δ.

L'état de la première unité de puissance 30.1 est vérifié à l'issue d'un délai déterminé, de l'ordre de quelques secondes, après l'augmentation de la quantité de puissance prélevée sur la première unité de puissance 30.1. Ce délai permet d'être certain que l'augmentation de la quantité de puissance prélevée sur cette dernière n'a pas affecté son état opérationnel. Quel que soit le mode de réalisation, lorsqu'il est nécessaire d'augmenter la quantité de puissance prélevée sur au moins des première et deuxième unités de puissance 30, 32, une étape d'augmentation de la quantité de puissance prélevée sur ladite deuxième unité de puissance 32.1 est décalée dans le temps par rapport à une étape d'augmentation de la quantité de puissance prélevée sur ladite première unité de puissance 30.1 d'une durée permettant au moins de déterminer l'état opérationnel ou non de la première unité de puissance 30.1. Le fait de décaler dans le temps l'augmentation de la quantité de puissance prélevée sur les deux unités de puissance permet d'éviter que les deux unités de puissance 30, 32 ne basculent simultanément à l'état non opérationnel, ce qui pourrait avoir pour conséquence d'affecter la sécurité du vol.

Selon une particularité de l'invention, lorsque, pour une première unité de puissance, la quantité de puissance prélevée sur cette première unité de puissance a été augmentée, préalablement à une étape d'augmentation de la quantité de puissance prélevée sur cette deuxième unité de puissance 32.1, le procédé comprend une étape de détermination de l'état opérationnel ou non de toutes les unités de puissance et une étape de comparaison du nombre déterminé d'unités de puissance à l'état opérationnel et du nombre minimal Mmin d'unités de puissance à l'état opérationnel requis pour un vol, l'étape d'augmentation de la quantité de puissance prélevée sur ladite deuxième unité de puissance 32.1 n'étant réalisée que :
- si la première unité de puissance 30.1 est à l'état opérationnel à l'issue de l'augmentation de la puissance prélevée sur cette première unité de puissance 30.1,
- ou dans le contraire, si le nombre déterminé d'unités de puissance à l'état opérationnel, sans prendre en compte l'état de la deuxième unité de puissance 32.1, est supérieur ou égal au nombre minimal Mmin d'unités de puissance à l'état opérationnel requis pour un vol.

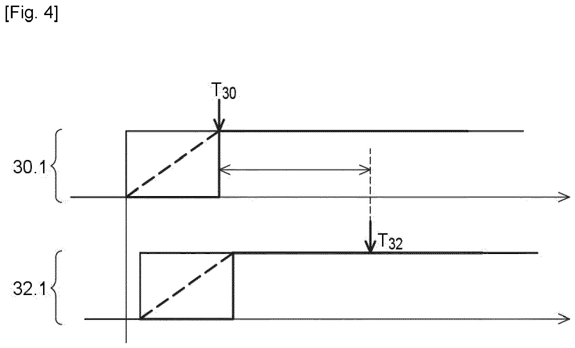

Selon un premier mode opératoire illustré sur la figure 4, l'unité de puissance, notamment l'unité de puissance 30.1, qui reçoit en premier la demande d'augmentation de la quantité de puissance prélevée reste prioritaire pendant tout le procédé. Ainsi, l'augmentation de la quantité de puissance prélevée sur la première unité de puissance est déclenchée en priorité à l'instant T30. L'augmentation de la quantité de puissance prélevée sur la deuxième unité de puissance 32.1 est déclenchée ultérieurement à l'instant T32, notamment si le nombre d'unités de puissance à l'état opérationnel permet de commander cette augmentation de la quantité de puissance prélevée sur la deuxième unité de puissance 32.1.

Selon un deuxième mode opératoire, l'augmentation de la quantité de puissance prélevée est déclenchée sur l'unité de puissance qui atteint en premier le régime moteur offrant la capacité de prélèvement de puissance requise.

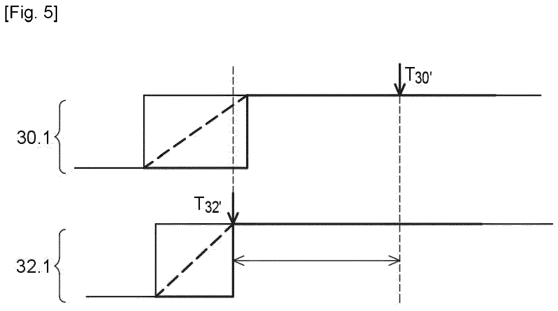

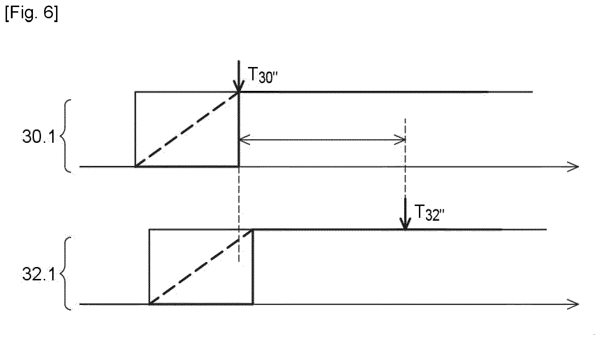

Selon un premier exemple illustré sur la figure 5, la deuxième unité de puissance 32.1 atteint en premier, à l'instant T32', la capacité de prélèvement de puissance adaptée à la future augmentation de la quantité de puissance prélevée. Par conséquent, l'augmentation de la quantité de puissance prélevée sur la deuxième unité de puissance 32.1 est déclenchée en premier dès cet instant T32'. L'augmentation de la quantité de puissance prélevée sur la première unité de puissance 30.1 est déclenchée ultérieurement à l'instant T30', notamment si le nombre d'unités de puissance à l'état opérationnel permet de commander cette augmentation de la quantité de puissance prélevée sur la première unité de puissance 30.1. Selon un deuxième exemple illustré sur la figure 6, la première unité de puissance 30.1 atteint en premier, à l'instant T30", la capacité de prélèvement de puissance adaptée à la future augmentation de la quantité de puissance prélevée. Par conséquent, l'augmentation de la quantité de puissance prélevée sur la première unité de puissance 30.1 est déclenchée en premier dès cet instant T30". L'augmentation de la quantité de puissance prélevée sur la deuxième unité de puissance 32.1 est déclenchée ultérieurement à l'instant T32", notamment si le nombre d'unités de puissance à l'état opérationnel permet de commander cette augmentation de la quantité de puissance prélevée sur la deuxième unité de puissance 32.1. Dans le cas où l'étape d'augmentation de la quantité de puissance prélevée sur la deuxième unité de puissance 32.1 n'est pas réalisée, les lois de sécurité avion classiques sont alors mises en oeuvre.

## Revendications

1. Procédé de gestion des quantités de puissance prélevées sur des unités de puissance (30.1, 32.1) des ensembles de propulsion (30, 32) d'un aéronef, chaque unité de puissance (30.1, 32.1) étant configurée pour occuper un état opérationnel ou un état non opérationnel et présentant une capacité de prélèvement de puissance, l'aéronef comprenant au moins des première et deuxième unités de puissance (30.1, 32.1) requérant pour un vol un nombre minimal (Mmin) d'unités de puissance à l'état opérationnel et présentant des besoins réels en énergie (44), le procédé comprenant une étape d'augmentation des quantités de puissance prélevées sur au moins les première et deuxième unités de puissance (30.1, 32.1) ; **caractérisé en ce que** le procédé comprend une étape d'augmentation de la quantité de puissance prélevée sur ladite deuxième unité de puissance (32.1) décalée dans le temps, par rapport à une étape d'augmentation de la quantité de puissance prélevée sur ladite première unité de puissance (30.1), d'une durée permettant au moins de déterminer l'état opérationnel ou non de la première unité de puissance (30.1).

2. Procédé de gestion selon la revendication 1, **caractérisé en ce que** l'état de la première unité de puissance (30.1) est vérifié à l'issue d'un délai déterminé, de l'ordre de quelques secondes, après l'augmentation de la quantité de puissance prélevée sur la première unité de puissance (30.1).

3. Procédé de gestion selon l'une des revendications précédentes, **caractérisé en ce que** l'étape d'augmentation de la quantité de puissance prélevée sur la deuxième unité de puissance (32.1) n'est réalisée que :
- si la première unité de puissance (30.1) est à l'état opérationnel à l'issue de l'augmentation de la puissance prélevée sur cette première unité de puissance (30.1),
- ou dans le cas contraire, si le nombre déterminé d'unités de puissance à l'état opérationnel, sans prendre en compte l'état de la deuxième unité de puissance (32.1), est supérieur ou égal au nombre minimal (Mmin) d'unités de puissance à l'état opérationnel requis pour un vol.

4. Procédé de gestion selon l'une des revendications précédentes, **caractérisé en ce que** l'unité de puissance parmi les unités de puissance de l'aéronef qui reçoit en premier une demande d'augmentation de la quantité de puissance prélevée reste prioritaire pendant tout le procédé, l'augmentation de la quantité de puissance prélevée sur l'unité de puissance ayant reçu en premier ladite demande d'augmentation étant déclenchée en premier.

5. Procédé de gestion selon l'une des revendications 1 à 3, **caractérisé en ce que** l'unité de puissance parmi les unités de puissance de l'aéronef ayant atteint en premier la capacité de prélèvement de puissance adaptée à une demande d'augmentation de la quantité de puissance reste prioritaire pendant tout le procédé, l'augmentation de la quantité de puissance prélevée sur ladite unité de puissance prioritaire étant déclenchée en premier.

## Patentansprüche

1. Verfahren zur Verwaltung von aus Leistungseinheiten (30.1, 32.1) der Antriebseinheiten (30, 32) eines Luftfahrzeugs entnommenen Leistungsmengen, wobei jede Leistungseinheit (30.1, 32.1) konfiguriert ist, einen betriebsbereiten Zustand oder einen nicht betriebsbereiten Zustand einzunehmen und eine Leistungsentnahmekapazität hat, wobei das Luftfahrzeug mindestens erste und zweite Leistungseinheiten (30.1, 32.1) enthält, für einen Flug eine Mindestanzahl (Mmin) von Leistungseinheiten im betriebsbereiten Zustand erfordert und einen tatsächlichen Energiebedarf (44) hat, wobei das Verfahren einen Schritt der Erhöhung der aus mindestens den ersten und zweiten Leistungseinheiten (30.1, 32.1) entnommenen Leistungsmengen enthält; **dadurch gekennzeichnet, dass** das Verfahren einen Schritt der Erhöhung der aus der zweiten Leistungseinheit (32.1) entnommenen Leistungsmenge enthält, der bezüglich eines Schritts der Erhöhung der aus der ersten Leistungseinheit (30.1) entnommenen Leistungsmenge um eine Dauer zeitversetzt ist, die es mindestens ermöglicht, den betriebsbereiten oder nicht betriebsbereiten Zustand der ersten Leistungseinheit (30.1) zu bestimmen.

2. Verwaltungsverfahren nach Anspruch 1, **dadurch gekennzeichnet, dass** der Zustand der ersten Leistungseinheit (30.1) am Ende einer bestimmten Frist in der Größenordnung von einigen Sekunden nach der Erhöhung der aus der ersten Leistungseinheit (30.1) entnommenen Leistungsmenge überprüft wird.

3. Verwaltungsverfahren nach einem der vorhergehenden Ansprüche, **dadurch gekennzeichnet, dass** der Schritt der Erhöhung der aus der zweiten Leistungseinheit (32.1) entnommenen Leistungsmenge nur durchgeführt wird:
- wenn die erste Leistungseinheit (30.1) nach der Erhöhung der aus dieser ersten Leistungseinheit (30.1) entnommenen Leistung im betriebsbereiten Zustand ist,
- oder im gegenteiligen Fall, wenn die bestimmte Anzahl von Leistungseinheiten im betriebsbereiten Zustand, ohne Berücksichtigung des Zustands der zweiten Leistungseinheit (32.1), höher als die oder gleich der Mindestanzahl (Mmin) von Leistungseinheiten im betriebsbereiten Zustand ist, die für einen Flug erforderlich sind.

4. Verwaltungsverfahren nach einem der vorhergehenden Ansprüche, **dadurch gekennzeichnet, dass** die Leistungseinheit unter den Leistungseinheiten des Luftfahrzeugs, die als erste eine Anforderung zur Erhöhung der entnommenen Leistungsmenge empfängt, während des ganzen Verfahrens prioritär bleibt, wobei die Erhöhung der aus der Leistungseinheit, die als erste die Erhöhungsanforderung empfangen hat, entnommenen Leistungsmenge als erste ausgelöst wird.

5. Verwaltungsverfahren nach einem der Ansprüche 1 bis 3, **dadurch gekennzeichnet, dass** die Leistungseinheit unter den Leistungseinheiten des Luftfahrzeugs, die als erste die an eine Erhöhungsanforderung der Leistungsmenge angepasste Leistungsentnahmekapazität erreicht hat, während des ganzen Verfahrens prioritär bleibt, wobei die Erhöhung der aus der prioritären Leistungseinheit entnommenen Leistungsmenge zuerst ausgelöst wird.

## Claims

1. Method for managing the amounts of power drawn from power units (30.1, 32.1) of the propulsion units (30, 32) of an aircraft, each power unit (30.1, 32.1) being configured to assume an operational state or a non-operational state and having a power drawing capacity, the aircraft comprising at least first and second power units (30.1, 32.1), which for a flight require a minimum number (Mmin) of power units in the operational state and which have actual energy requirements (44), the method comprising a step of increasing the amounts of power drawn from at least the first and second power units (30.1, 32.1); **characterized in that** the method comprises a step of increasing the amount of power drawn from said second power unit (32.1) that is time shifted, with respect to a step of increasing the amount of power drawn from said first power unit (30.1), for a duration that at least allows the operational state or the non-operational state of the first power unit (30.1) to be determined.

2. Management method according to Claim 1, **characterized in that** the state of the first power unit (30.1) is checked following a determined delay, of the order of a few seconds, after the increase in the amount of power drawn from the first power unit (30.1).

3. Management method according to either of the preceding claims, **characterized in that** the step of increasing the amount of power drawn from the second power unit (32.1) is carried out only:
- if the first power unit (30.1) is in the operational state after the increase in the power drawn from this first power unit (30.1),
- or, otherwise, if the determined number of power units in the operational state, without taking into account the state of the second power unit (32.1), is greater than or equal to the minimum number (Mmin) of power units in the operational state required for a flight.

4. Management method according to one of the preceding claims, **characterized in that** the power unit from among the power units of the aircraft that first receives a request for an increase in the amount of power drawn remains the priority throughout the method, with the increase in the amount of power drawn from the power unit that first received said request for an increase being triggered first.

5. Management method according to one of Claims 1 to 3, **characterized in that** the power unit from among the power units of the aircraft having first reached the power drawing capacity adapted to a request for an increase in the amount of power remains the priority throughout the method, with the increase in the amount of power drawn from said priority power unit being triggered first.
